Europäisches Patentamt

European Patent Office

Office européen des brevets

(19)

(11) **EP 0 488 082 B1**

(12) **EUROPEAN PATENT SPECIFICATION**

(45) Date of publication and mention
of the grant of the patent:
**27.03.1996 Bulletin 1996/13**

(51) Int Cl.6: **H04N 1/40**

(21) Application number: **91119970.1**

(22) Date of filing: **22.11.1991**

(54) **Image processing method and apparatus**

Bildverarbeitungsverfahren und -gerät

Procédé et appareil de traitement d'images

(84) Designated Contracting States:
**DE FR GB**

(30) Priority: **24.11.1990 JP 319393/90**

(43) Date of publication of application:
**03.06.1992 Bulletin 1992/23**

(73) Proprietor: **Dainippon Screen Mfg. Co., Ltd.
Kamikyo-ku Kyoto 602 (JP)**

(72) Inventor: **Ikeda, Iwata,**
**c/o Dainippon Screen Mfg. Co., Ltd.**
**Horikawa-dori, Kamikyo-ku, Kyoto (JP)**

(74) Representative: **Goddar, Heinz J., Dr. et al**
**FORRESTER & BOEHMERT**
**Franz-Joseph-Strasse 38**
**D-80801 München (DE)**

(56) References cited:
**EP-A- 0 110 185        US-A- 4 805 013**

• **PATENT ABSTRACTS OF JAPAN vol. 10, no.
317 (E-449) 28 October 1986 & JP-A-61 125 281**

**Description**

BACKGROUND OF THE INVENTION

(1) Field of the Invention

The present invention relates to a method of and an apparatus for effecting a density conversion, using a predetermined density conversion curve, of density data obtained by reading an original having consecutive tones with a prepress scanner or the like, and a smoothing space filtering process for the density data resulting from the density conversion. More particularly, the invention relates to a technique of reducing tone jumps and false contours appearing in an outputted image when the density data are converted digitally.

(2) Description of the Related Art

A known method of converting density data in a digital process uses a lookup table. Specifically, image signals obtained by reading an original having consecutive tones with a prepress scanner are converted into digital density data of 256 tones, for example. These density data are applied as addresses in the lookup table. The lookup table stores a selected density conversion curve representing output density levels for the respective addresses. Output density levels corresponding to input density levels are read from the lookup table to effect the density conversion of the density data.

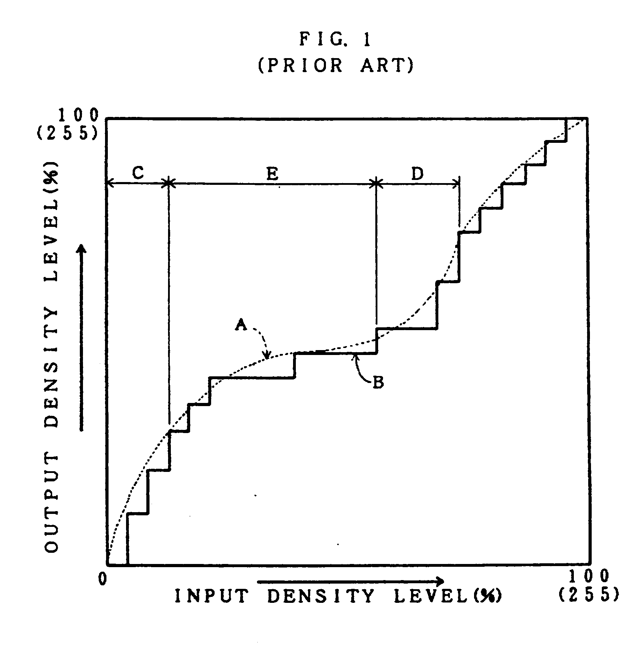

Fig. 1 is a schematic view of a density conversion curve stored in such a lookup table.

In Fig. 1, the horizontal axis represents input density levels and the vertical axis output density levels, both expressed digitally in 256 tones in dot%. Consequently, even though the operator sets a density conversion curve having a smooth characteristic A, the density conversion curve actually stored in the lookup table has a stepwise characteristic B.

As seen from the characteristic B in Fig. 1, a large difference occurs in adjacent output density levels in sections where the density conversion curve shows steep gradients (sections C and D in Fig. 1). This results in the inconvenience that the portions of an outputted image corresponding to these sections have low image quality with discontinuity of tone variations (so-called tone jumps) and false contours.

In order to reduce the tone jumps and false contours, abrupt changes in the tone are suppressed in conventional practice by effecting a smoothing space filtering process for the output density data resulting from the density conversion. However, such conventional practice has the following disadvantage.

According to the prior art, the smoothing space filtering process is effected for the output density data in all sections of the conversion curve. This filtering process, therefore, smooths also the output density data in sections where the density conversion characteristic describes relatively gentle gradients (e.g. section E in Fig. 1). Even the contours in such sections that require density differences are smoothed, thereby blurring the outputted image as a whole.

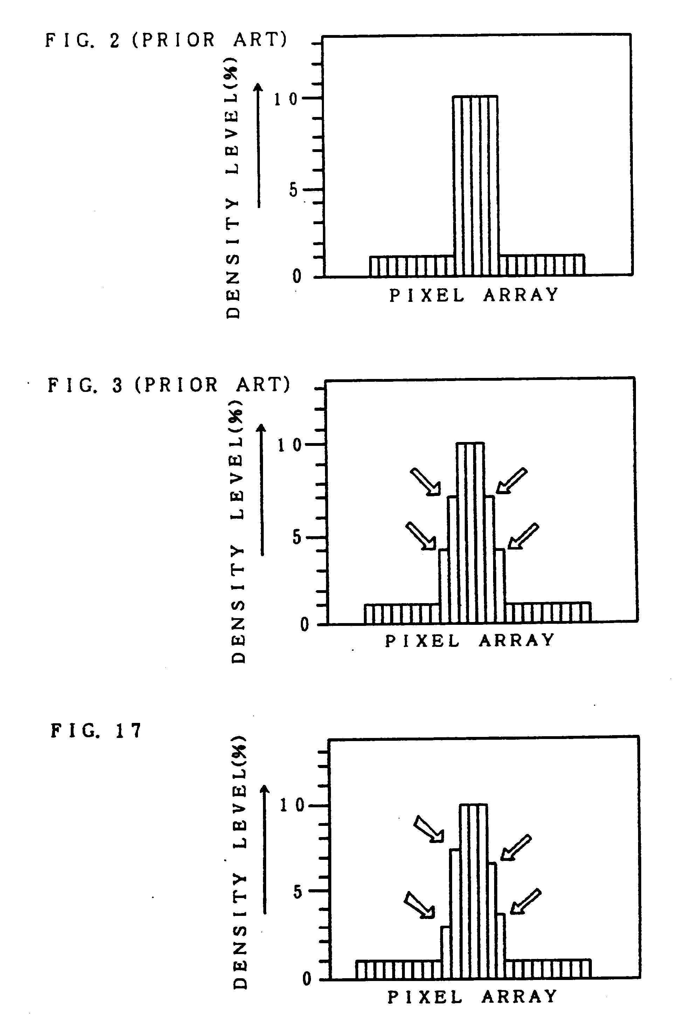

Further, as shown in Fig. 2, sharp boundaries between density levels may be present in the density-converted data. If the smoothing space filtering process is simply effected for such boundaries, curves showing equal density levels will appear in stripes in the boundaries as indicated by arrows in Fig. 3, resulting in an unnatural image.

SUMMARY OF THE INVENTION

The present invention has been made having regard to the state of the art noted above, and its primary object is to provide an image processing method and apparatus capable of effecting a smoothing space filtering process only for areas prone to tone jumps and false contours.

Another object of the present invention is to provide an image processing method and apparatus which prevent stripes from appearing in boundaries between different density levels when a smoothing space filtering process is effected for output density data resulting from a density conversion.

The above objects are fulfilled, according to the present invention, by an image processing method according to claim 1.

According to the present invention, the smoothing space filtering process is effected only for density data resulting from the density conversion and belonging to density areas having absolute values of differential coefficients of the density conversion curve exceeding a predetermined value. That is, the smoothing space filtering process is effected selectively and only for areas having large density conversion factors and prone to tone jumps and false contours. Consequently, image quality is improved as a whole, with tone jumps and false contours in such areas being suppressed while the other areas are free from blurs due to the smoothing process.

The image processing method according to the present invention may further comprise a step of adding a random number to smoothed density data of a subject pixel resulting from the smoothing space filtering process effected at the fifth step. This random number has an amplitude variable with an absolute value of a differential coefficient at a point on the density conversion curve corresponding to the density data of the subject pixel and/or with a standard deviation of density data of pixels in a small area to be subjected to the filtering process.

Where the random number added to the smoothed density data has an amplitude variable with an absolute value of a differential coefficient at a point on the density conversion curve corresponding to the density data of the subject pixel, a random number with a large amplitude is added for an area having a density difference enlarged by the density conversion. This reduces the unpleasant stripes resulting from the smoothing process. For an area having a density difference little enlarged, the random number (noise) added has a reduced level to avoid deterioration in image quality.

Where the random number added to the smoothed density data has an amplitude variable with a standard deviation of density data of pixels in a small area to be subjected to the filtering process, a random number with a relatively large amplitude is added to smoothed density data of a small area subjected to the smoothing space filtering process and having dispersed density data, i.e. a boundary between different density levels. This is effective to reduce generation of unpleasant stripes due to the smoothing process. The random number (noise) added for an area of little density difference has a reduced level to avoid deterioration in image quality.

BRIEF DESCRIPTION OF THE DRAWINGS

For the purpose of illustrating the invention, there are shown in the drawings several forms which are presently preferred, it being understood, however, that the invention is not limited to the precise arrangements and instrumentalities shown.

Figs. 1 through 3 show the prior art, in which:-

Fig. 1 is an explanatory view of a density conversion curve,
Fig. 2 is a view showing boundaries between different densities in density data following a density conversion, and
Fig. 3 is a view showing a way in which stripes appear as a result of a simple smoothing space filtering process.

Figs. 4 through 17 show embodiments of the present invention, in which:-

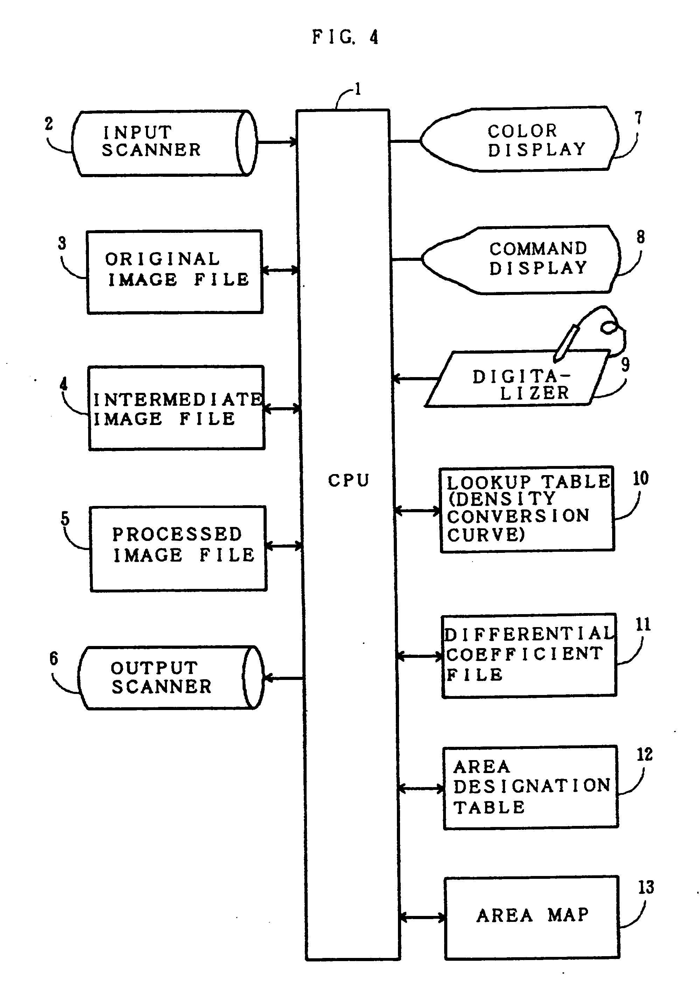

Fig. 4 is a block diagram showing an outline of an image processing apparatus,

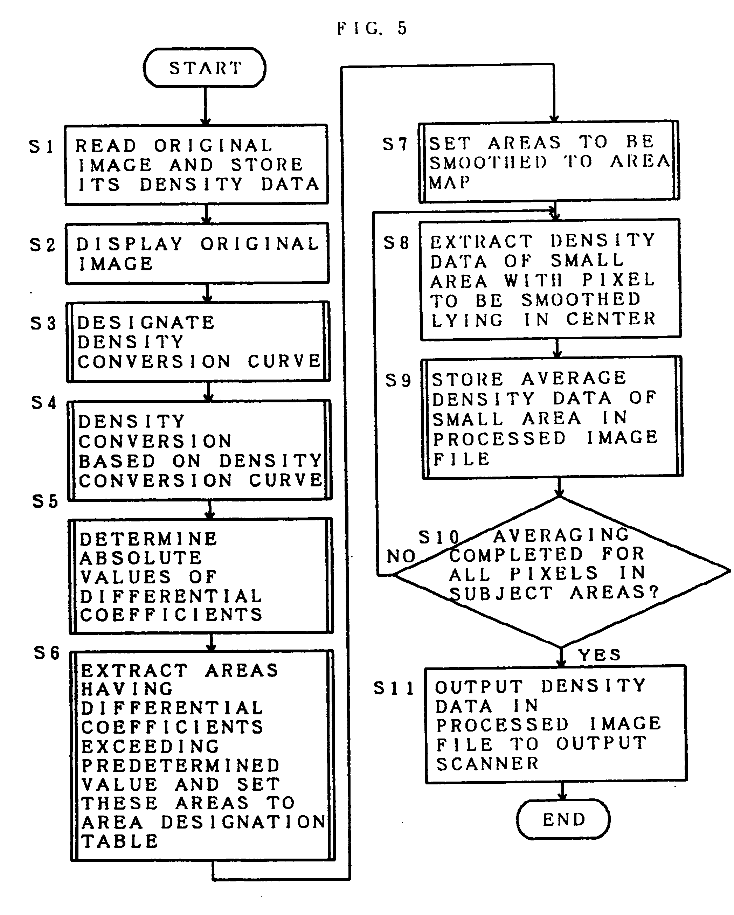

Fig. 5 is a flowchart of entire density conversion and smoothing image processing,

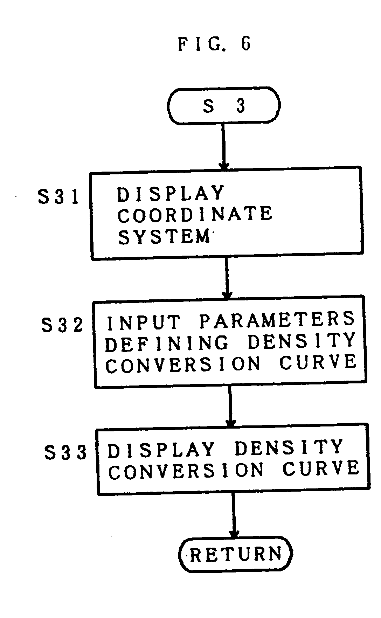

Fig. 6 is a flowchart showing details of a step of designating a density conversion curve,

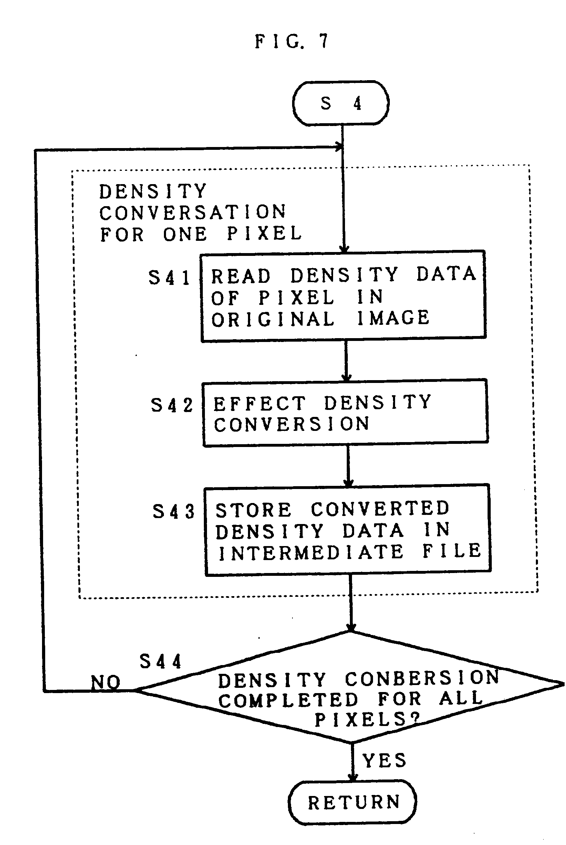

Fig. 7 is a flowchart showing details of a density conversion process,

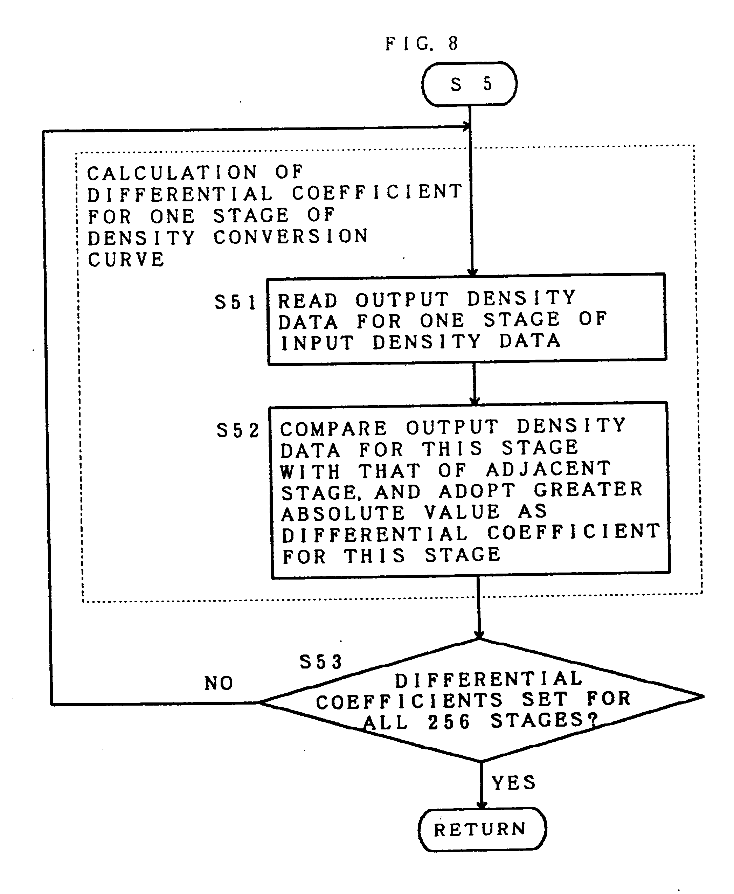

Fig. 8 is a flowchart showing details of a process of calculating absolute values of differential coefficients of the density conversion curve,

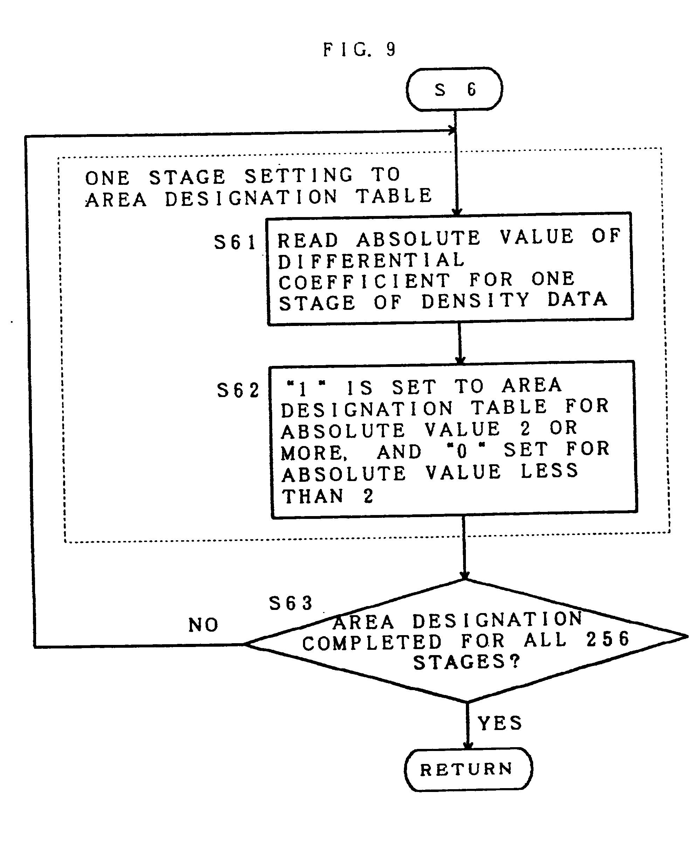

Fig. 9 is a flowchart showing details of a process of designating sections of the density conversion curve,

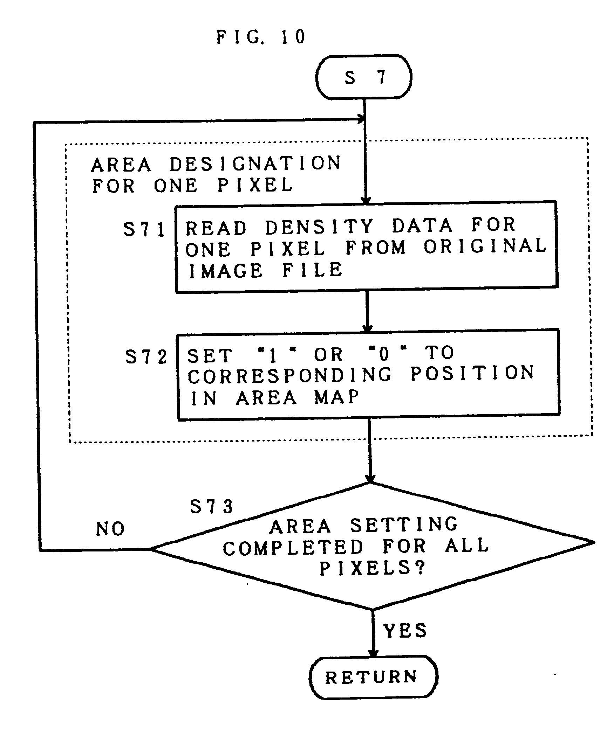

Fig. 10 is a flowchart showing details of an area map preparation process,

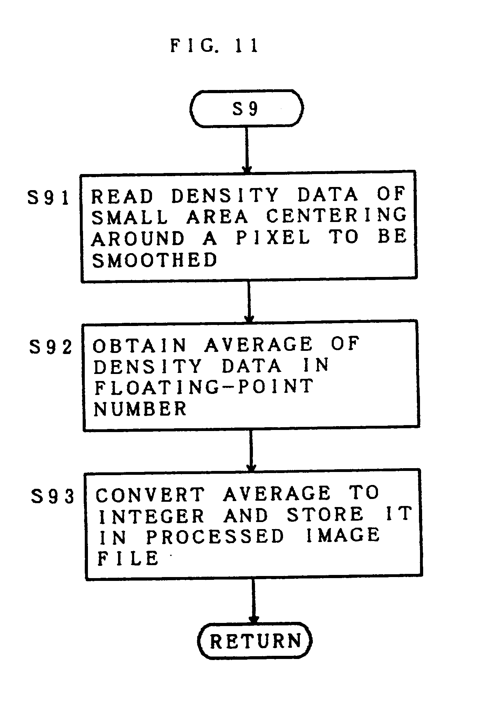

Fig. 11 is a flowchart showing details of a smoothing space filtering process,

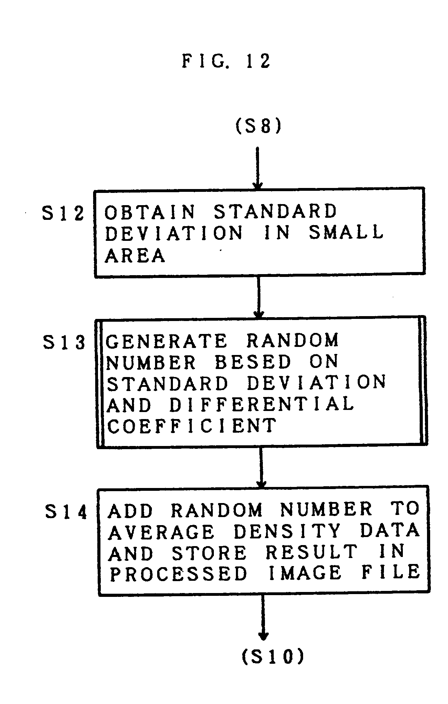

Fig. 12 is a flowchart showing a portion of processing characteristic of a second embodiment,

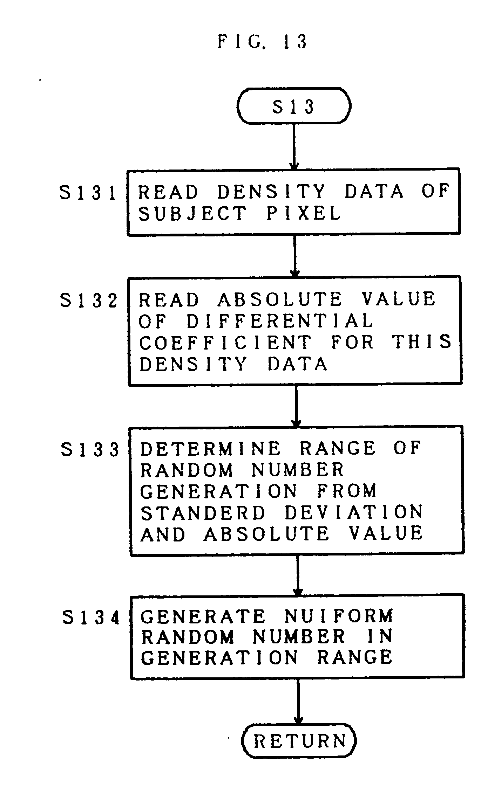

Fig. 13 is a flowchart showing details of a random number generation process in the second embodiment,

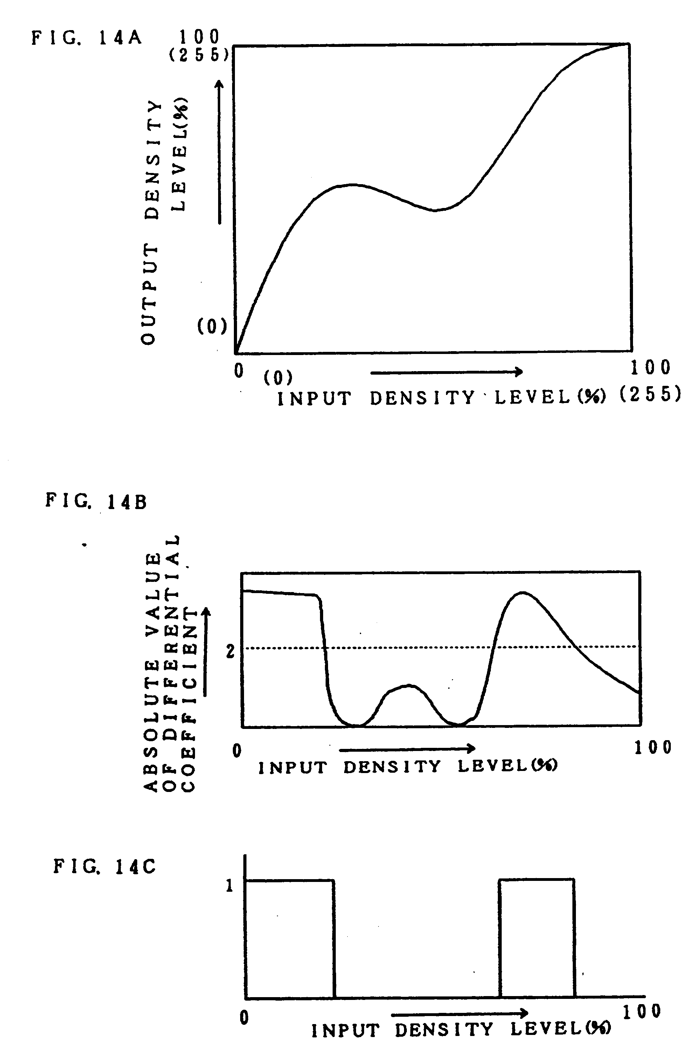

Figs. 14A through 14C are waveform diagrams illustrating a processing sequence for designating sections of the density conversion curve,

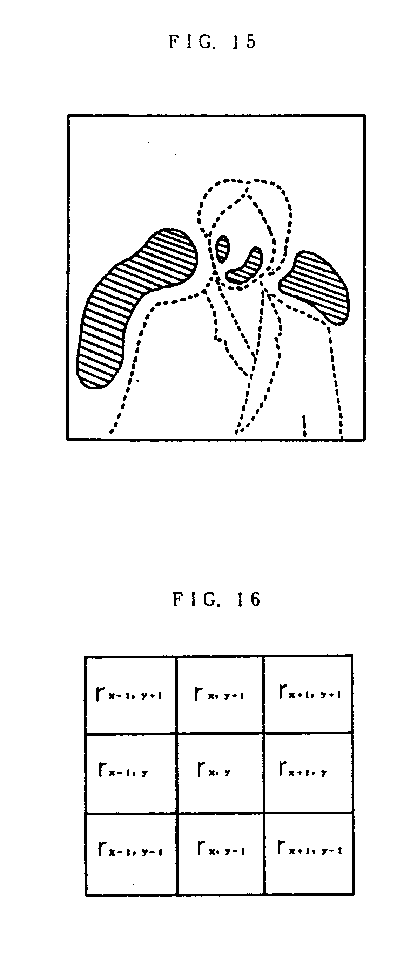

Fig. 15 is a schematic view of the area map,
Fig. 16 is a schematic view of a small area including a pixel undergoing the smoothing space filtering process, and
Fig. 17 is a view illustrating functions of the smoothing space filtering process in the second embodiment.

DETAILED DESCRIPTION OF THE PREFERRED EMBODIMENTS

Embodiments of the present invention will be described in detail hereinafter with reference to the drawings.

First Embodiment

Fig. 4 is a block diagram showing an outline of an image processing apparatus in a first embodiment of the present invention.

Referring to Fig. 4, this apparatus includes a CPU 1 for carrying out various image processing as described later, an input scanner 2, an original image file 3 for storing density data of an original image read by the input scanner 2, an intermediate image file 4 for storing density data of the original image after a density conversion, a processed image file 5 for storing density data resulting from a smoothing space filtering process effected for the density-converted data, an output scanner 6 for recording the density data stored in the processed data file 5 on a photosensitive material, a color display 7 for presenting the original image and other information, a command display 8 for presenting numeric values and other selected conditions, a digitalizer 9 for setting a density conversion curve and other image processing conditions, a lookup table 10 for storing the density conversion curve, a differential coefficient file 11 for storing absolute values of differential coefficients of the density conversion curve, an area designation table 12 for designating density areas in which the absolute values of the differential coefficients of the density conversion curve exceed a predetermined value, and an area map 13 for storing a distribution of areas of the original image whose density data correspond to the density areas set to the area designation table 12.

An image processing operation of this apparatus will be described next with reference to the flowchart shown in Fig. 5.

First, an original image is read by the input scanner 2 and its density data are stored in the original image file 3 (step S1). The original image is presented on the color display 7 (step 2).

At step S3, the operator designates a density conversion curve through the digitalizer 9 while looking at the color display 7 for confirmation. Specifically, as shown in Fig. 6, the color display 7 presents a coordinate system for comparing input density levels (density levels of the original image) and output density levels (density levels after the density conversion) (step S31). The operator inputs, through the digitalizer 9, parameters defining a density conversion curve (step S32). The density conversion curve based on these parameters appears in the coordinate system on the color display 7, and this density conversion curve is set to the lookup table 10 (step S33). Fig. 14A shows an example of density conversion curve set at this time.

At step S4, the original image data stored in the original image file 3 is subjected to a density conversion based on the density conversion curve stored in the lookup table 10. Specifically, as shown in Fig. 7, a density data of a pixel to be processed is picked up from the original image data stored in the original image file 3 (step S41). This density data is applied as an input address to the lookup table 10 to read a corresponding output density level therefrom (step S42). The converted density data is stored in the position of the intermediate image file 4 corresponding to the pixel under processing (step S43). The above density conversion is carried out for all the pixels in the original image file 3, and the results are stored in the intermediate image file 4 (step S44).

Step S5 is executed to determine absolute values of the differential coefficients of the density conversion curve set to the lookup table 10. Specifically, as shown in Fig. 8, the output density data is read from the lookup table 10 for each stage of the input density data (step S51). This density data is compared with the density data of an adjacent input density stage, and the greater of the two absolute values is stored in the differential coefficient file 11 as a differential coefficient of the density conversion curve for this stage of density data (step S52). This above process is repeated for all the 256 stages (step S53). Fig. 14B shows the absolute values of the differential coefficients of the density conversion curve stored in the differential coefficient file 11.

Step S6 is executed to extract sections of the curve in which the differential coefficients obtained as above exceed a predetermined value, and to set such sections to the area designation table 12. Specifically, as shown in Fig. 9, the absolute value of the differential coefficient of the density conversion curve for one stage of the density data is read from the differential coefficient file 11 (step S61). If this absolute value is 2 or more, for example, the value of this density data is set to "1" in the area designation table 12, and otherwise the value is set to "0" (step S62). This area designation process is repeated for the absolute values of the differential coefficients of all the 256 stages (step S63). Fig. 14C is a schematic view of the resulting area designation table 12.

Step S7 is executed to set to the area map 13 the areas of the density data in the original image file 3 to be smoothed on the basis of the data in the area designation table 12. Specifically, as shown in Fig. 10, the density data of a pixel to be smoothed is read from the original image file 3 (step S71). If the value of this density data corresponds to area "1" in the area designation table 12, "1" is set to the corresponding position in the area map 13, and otherwise "0" is set thereto (step S72). The above area setting is repeated for all the pixels in the original image (step S73). Fig. 15 shows the area map 13 obtained from the above process. The hatched portions of Fig. 15 are the areas to be smoothed to which "1" has been set, and the other portions are areas requiring no smoothing operation to which "0" has been set. The broken lines show contours in the original image.

At step S8, the density data of a small area with a pixel to be smoothed lying in the center (in this example, a total of 9 pixels, i.e. 3 by 3, with a pixel to be smoothed lying in the center) are extracted from each portion corresponding to area "1" set to the area map 13 among density-converted data stored in the intermediate image file 4.

Then, step S9 is executed to obtain an average value of the density data of the small area of 3 by 3 pixels including the pixel to be smoothed which are read from the intermediate image file 4, and to store the average value in a corresponding position in the processed image file 5 as density data of the smoothed pixel. Specifically, as shown in Fig. 11, the density data of a small area (3x3 pixels) centering around a pixel to be smoothed are read from the intermediate image file 4 (step S91). An average value is derived in a floating-point real number from these density data (step S92). The density data obtained in a real number is converted to an integer (i.e. quantized) and stored in the position of the processed image file 5 corresponding to the subject pixel (step S93). Where the pixels surrounding the subject pixel $r_{x,y}$ are expressed as shown in Fig. 16, the density data $Q_{xy}$ of the smoothed image in the small area including the subject pixel $r_{x,y}$ is expressed by the following equation:

$$Qxy = \frac{\displaystyle\sum_{i=1}^{3}\sum_{j=1}^{3} r_{x+i-2,\ y+j-2}}{3 \times 3} \qquad \cdots \ (1)$$

After repeating the processes at steps S8 and S9 for all the pixels in the subject areas in the area map 13 (step S10), the smoothed density data in the processed image file 5 are outputted to the output scanner (step S11).

In this embodiment, as described above, the smoothing space filtering process is effected only for the density areas in which the absolute values of differential coefficients of the density conversion curve are "2" or more, i.e. the input density data are enlarged twofold or more. This process reduces tone jumps and false contours appearing in areas having large density conversion factors. Since no smoothing space filtering process is applied to areas having small density conversion factors, these areas are free from blurred contours.

Second Embodiment

The characteristic feature of this embodiment lies in a process of adding a random number to the density data resulting from the smoothing space filtering process effected for a density area in which the input density data are enlarged twofold or more. In particular, the random number has an amplitude varied with a standard deviation in the small area including a subject pixel and with the differential coefficient of the density conversion curve. This method is executed with the same apparatus as in the first embodiment shown in Fig. 4, and will not be described again.

The second embodiment will be described hereinafter with reference to the flowchart shown in Fig. 12.

Step S12 in Fig. 12 follows steps S1 through S8 of the first embodiment shown in Fig. 5, i.e. follows extraction of the density data of a small area with a pixel to be smoothed from a portion in the intermediate image file 4 corresponding to area "1" set to the area map 13.

Step S12 is executed to obtain a value of standard deviation of each density data in the small area extracted at step S8. Where the pixels surrounding the subject pixel $r_{x,y}$ are expressed as shown in Fig. 16, the standard deviation Sxy in the small area including the subject pixel $r_{x,y}$ is derived from the following equation:

$$Sxy = \left[ \frac{\displaystyle\sum_{i=1}^{3}\sum_{j=1}^{3} \left\{ r_{x+i-2,\ y+j-2} - \frac{\displaystyle\sum_{i=1}^{3}\sum_{j=1}^{3} r_{x+i-2,\ y+j-2}}{3 \times 3} \right\}^{2}}{3 \times 3} \right]^{\frac{1}{2}}$$

$$\cdots \ (2)$$

At step S13, a random number is generated on the basis of the standard deviation obtained at step S12 and the absolute value of a differential coefficient of the density conversion curve stored in the differential coefficient file 11. Specifically, as shown in Fig. 13, the density data of the subject pixel is read from the original image file 3 (step S131). Then, the absolute value of the differential coefficient of the density conversion curve for this density data is read from the differential coefficient file 11 (step S132). A range of random number generation is determined from the standard deviation Sxy of this small area and the absolute value $|f'(P_{x,y})|$ of the differential coefficient (step S133). A uniform random number is generated in a floating-point real number for that range (step S134).

At step S14, an average value of the density data of the small area of 3 by 3 pixels including the pixel to be smoothed which are read from the intermediate image file 4 is obtained as described in the first embodiment, and this average value is stored in a corresponding position in the processed image file 5 as density data of the smoothed pixel. Specifically, the density data of a small area (3x3 pixels) centering around a pixel to be smoothed are read from the intermediate image file 4. An average value is derived in a floating-point real number from these density data. This average value and the random number generated at step S13 are added to obtain a density data of the subject pixel in a real number. The density data thus obtained is converted to an integer (i.e. quantized) and stored in the position of the processed image file 5 corresponding to the subject pixel. The resulting density data Qxy of the smoothed image is expressed by the following equation:

$$Qxy = \frac{\displaystyle\sum_{i=1}^{3} \sum_{j=1}^{3} r\ x+i-2,\ y+j-2}{3 \times 3}$$

$$+\ md\ \times\ \{Sxy\ \times\ |f'(P\ x,y)|\}^{\frac{1}{2}}\ \times\ \alpha$$

$$\ldots\ (3)$$

In the above equation, md is a random number generated in the range of -1 to +1 (which corresponds to a random number generated at a uniform rate, known as a white random number), and $\alpha$ is a constant appropriately selected to adjust the effect of the random number (e.g. varied degrees of roughness) in accordance with degrees of density variations.

In this embodiment, the amplitude of the random number is varied using both the standard deviation of the small area centering around the subject pixel and the absolute value of the differential coefficient of the density conversion curve. However, only one of these values may be used in varying the amplitude of the random number.

Where, for example, only the absolute value of the differential coefficient of the density conversion curve is used in varying the amplitude of the random number, the density data Qxy of the smoothed image is expressed by the following equation:

$$Qxy = \frac{\displaystyle\sum_{i=1}^{3} \sum_{j=1}^{3} r\ x+i-2,\ y+j-2}{3 \times 3}$$

$$+\ md\ \times\ \{|f'(P\ x,y)|\}^{\frac{1}{2}}\ \times\ \alpha$$

$$\ldots\ (4)$$

Where only the standard deviation of the small area centering around the subject pixel is used in varying the amplitude of the random number, the density data Qxy of the smoothed image is expressed by the following equation:

$$Qxy = \frac{\displaystyle\sum_{i=1}^{3} \sum_{j=1}^{3} r\ x+i-2,\ y+j-2}{3 \times 3}$$

$$+\ md\ \times\ (Sxy)^{\frac{1}{2}}\ \times\ \alpha$$

$$\ldots\ (5)$$

After step S14, the operation proceeds to step S10 in Fig. 5, to carry out the above smoothing process for all the pixels in the subject areas in the area map 13. Thereafter the smoothed density data in the processed image file 5 are outputted to the output scanner.

In the smoothing space filtering process of this embodiment, as described above, the amplitude of the random number added to the average density value in the small area centering around a subject pixel resulting from the smoothing process is varied in accordance with the standard deviation of the small area and with the absolute value of the differential coefficient of the density conversion curve. In this way, random numbers with large amplitudes are added for those density data resulting from the density conversion and having large density differences. Consequently, as shown in Fig. 17, the density levels are dispersed around boundaries having large density differences, thereby reducing generation of density stripes due to the smoothing process. Besides, the random numbers have reduced amplitudes for areas of little density difference, to produce a low-noise image and to improve image quality as a whole.

Each of the foregoing embodiments employs the process of smoothing the density data of a subject pixel by calculating the average value of the density data of the small, 3x3 pixel area centering around the subject pixel. However, the method of executing the smoothing space filtering process is variable and not limited to the method described in the embodiments.

The present invention may be embodied in other specific forms without departing from the scope of the invention as defined by the appended claims.

## Claims

1. An image processing method for effecting a density conversion, using a predetermined density conversion curve, of density data obtained by reading an original having consecutive tones, and a smoothing space filtering process for the density data resulting from the density conversion, said method comprising:

   a first step of effecting the density conversion, based on the predetermined density conversion curve, of density data of an original image;
   a second step of obtaining the absolute value of the differential coefficient for each point on said density conversion curve;
   a third step of determining for which points on said curve said absolute values exceed a predetermined value;
   a fourth step of preparing a map of density data of the original image corresponding to the points found in the third step; and
   a fifth step of effecting the smoothing space filtering process for density-converted data belonging to said map prepared at the fourth step.

2. An image processing method as defined in claim 1, further comprising a step of adding a random number to smoothed density data of a subject pixel resulting from said smoothing space filtering process effected at the fifth step, said random number having an amplitude variable with an absolute value of a differential coefficient at a point on said density conversion curve corresponding to the density data of said subject pixel.

3. An image processing method as defined in claim 1, further comprising a step of adding a random number to smoothed density data of a subject pixel resulting from said smoothing space filtering process effected at the fifth step, said random number having an amplitude variable with a standard deviation of density data of pixels in a small area to be subjected to said filtering process.

4. An image processing method as defined in claim 1, further comprising a step of adding a random number to smoothed density data of a subject pixel resulting from said smoothing space filtering process effected at the fifth step, said random number having an amplitude variable with an absolute value of a differential coefficient at a point on said density conversion curve corresponding to the density data of said subject pixel and with a standard deviation of density data of pixels in a small area to be subjected to said filtering process.

5. An image processing apparatus for effecting a density conversion, using a predetermined density conversion curve, of density data obtained by reading an original having consecutive tones, and a smoothing space filtering process for the density data resulting from the density conversion, said apparatus comprising:

   input means for reading the original;
   original image storage means (3) for storing density data of an original image read by said input means;
   designating means for designating a density conversion curve of the density data of said original image;
   density conversion curve storage means (10) for storing said density conversion curve designated by said designating means;
   density conversion means for effecting a density conversion, based on said density conversion curve stored in said density conversion curve storage means, of the density data of said original image in said original image storage means;
   intermediate image storage means (4) for storing density data resulting from the density conversion by said density conversion means;
   differential coefficient calculating means (1) for calculating absolute values of differential coefficients of points on said density conversion curve stored in said density conversion curve storage means;
   density area extracting means for determining for which points on said curve said absolute values exceed a predetermined value;
   density area storage means for storing the points found by said density area extracting means;
   determining means for referring to contents of said density area storage means and determining whether the

## EP 0 488 082 B1

density data of pixels successively read from said original image storage means correspond to the conversion curve points stored in said density area storage means;

area map storage means for storing a map of results provided by said determining means;

smoothing means for successively reading the density data of pixels from said intermediate image storage means, outputting the density data after effecting the smoothing space filtering process therefor when said pixels belong to a subject area stored in said area map storage means, and outputting the density data without effecting the smoothing space filtering process when said pixels are outside said subject area;

processed image storage means for storing the density data of said pixels successively outputted from said smoothing means; and

output means for outputting contents of said processed image storage means.

6. An image processing apparatus as defined in claim 5, further comprising first operating means for adding a random number to smoothed density data of a subject pixel resulting from said smoothing space filtering process, said random number having an amplitude variable with an absolute value of a differential coefficient at a point on said density conversion curve corresponding to the density data of said subject pixel, and outputting a resulting sum to said processed image storage means.

7. An image processing apparatus as defined in claim 5, further comprising second operating means for adding a random number to smoothed density data of a subject pixel resulting from said smoothing space filtering process, said random number having an amplitude variable with a standard deviation of density data of pixels in a small area to be subjected to said filtering process, and outputting a resulting sum to said processed image storage means.

8. An image processing apparatus as defined in claim 5, further comprising third operating means for adding a random number to smoothed density data of a subject pixel resulting from said smoothing space filtering process, said random number having an amplitude variable with an absolute value of a differential coefficient at a point on said density conversion curve corresponding to the density data of said subject pixel and with a standard deviation of density data of pixels in a small area to be subjected to said filtering process, and outputting a resulting sum to said processed image storage means.

## Patentansprüche

1. Bildverarbeitungsverfahren zum Durchführen einer Dichtekonversion unter Verwendung einer vorbestimmten Dichtekonversionskurve von Dichtedaten, die durch das Einlesen eines Originals mit aufeinanderfolgenden Tönungen erhalten werden, und eines glättenden Raumfilterungsprozesses für die Dichtedaten, die sich bei der Dichtekonversion ergeben; wobei das Verfahren beinhaltet:

   einen ersten Schritt zum Durchführen der Dichtekonversion, basierend auf der vorbestimmten Dichtekonversionskurve für Dichtedaten eines Originalbildes;

   einen zweiten Schritt zum Festlegen des absoluten Wertes des Differentialkoeffizienten für jeden Punkt auf der Dichtekonversionskurve;

   einen dritten Schritt zum Festlegen, für welche Punkte auf der Kurve die absoluten Werte einen vorbestimmten Wert überschreiten;

   einen vierten Schritt zur Vorbereitung eines Plans von Dichtedaten des Originalbildes, entsprechend den Punkten, die im dritten Schritt bestimmt wurden; und

   einen fünften Schritt zum Durchführen des glättenden Raumfilterungsprozesses für dichtekonvertierte Daten, welche zum im vierten Schritt vorbereiteten Plan gehören.

2. Bildverarbeitungsverfahren nach Anspruch 1, welches weiterhin einen Schritt der Addition einer Zufallszahl zu den geglätteten Dichtedaten eines betreffenden Bildelementes enthält, welches sich aus dem glättenden Raumfilterungsprozeß aus dem fünften Schritt ergibt, wobei die Zufallszahl eine Amplitude hat, die mit einem absoluten Wert eines Differentialkoeffizienten an einem Punkt auf der Dichtekonversionskurve, der den Dichtedaten des betreffenden Bildelementes entspricht, variiert.

**3.** Bildverarbeitungsverfahren nach Anspruch 1, welches weiterhin einen Schritt der Addition einer Zufallszahl zu geglätteten Dichtedaten eines betreffenden Bildelementes aus dem glättendem Raumfilterungsprozeß des fünften Schritts enthält, mit einer Amplitude der Zufallszahl, die variabel mit einer Standardabweichung von Dichtedaten von Bildelementen in einem kleinen, von dem Filterungsprozeß betroffenen Bereich ist.

**4.** Bildverarbeitungsverfahren nach Anspruch 1, welches weiterhin einen Schritt der Addition einer Zufallszahl zu geglätteten Dichtedaten eines betreffenden Bildelementes aus dem glättenden Raumfilterungsprozeß des fünften Schritts enthält, mit einer Amplitude der Zufallszahl, die variabel mit dem absoluten Wert eines Differentialkoeffizienten an einem Punkt der Dichtekonversionskurve ist, korrespondierend zu den Dichtedaten des betreffenden Bildelementes und mit einer Standardabweichung von Dichtedaten der Bildelemente in einem kleinen Bereich, der von dem Filterungsprozeß betroffen ist.

**5.** Bildverarbeitungsgerät zum Durchführen einer Dichtekonversion, unter Verwendung einer vorbestimmten Dichtekonversionskurve von Dichtedaten, erhalten durch Einlesen eines Originals mit aufeinanderfolgenden Tönungen, und eines glättenden Raumfilterungsprozesses für die Dichtedaten, die sich aus der Dichtekonversion ergeben; wobei das Gerät aufweist:

Eingangsvorrichtungen zum Einlesen des Originals;

Originalbildspeichervorrichtungen (3), zum Speichern von Dichtedaten eines Originalbildes, welches durch die Eingangsvorrichtungen eingelesen wurde;

Zuordnungsvorrichtungen zum Zuordnen einer Dichtekonversionskurve der Dichtedaten des Originalbildes;

Speichervorrichtungen für die Dichtekonversionskurve (10), zum Speichern der Dichtekonversionskurve, welche von den Zuordnungsvorrichtungen zugeordnet wurde;

Dichtekonversionsvorrichtungen zum Durchführen einer Dichtekonversion, basierend auf der Dichtekonversionskurve, welche mit den Speichervorrichtungen für die Dichtekonversionskurve gespeichert wurde, der Dichtedaten des Originalbildes in den Originalbildspeichervorrichtungen;

Zwischenbildspeichervorrichtungen (4), zum Speichern von Dichtedaten, die sich aus der Dichtekonversion durch die Dichterkonversionsvorrichtungen ergeben;

Differentialkoeffizientenberechnungsvorrichtungen (1), zum Berechnen absoluter Werte von Differentialkoeffizienten von Punkten der Dichtekonversionskurve, die in den Dichtekonversionskurvenspeichervorrichtungen gespeichert ist;

Dichtebereichsextraktionsvorrichtungen zum Festlegen, für welche Punkte auf der Kurve die absoluten Werte einen vorbestimmten Wert überschreiten;

Dichtebereichsspeichervorrichtungen zum Speichern der durch die Dichtebereichsextraktionsvorrichtungen gefundenen Punkte;

Festlegungsvorrichtungen, um auf Inhalte der Dichtebereichsspeichervorrichtungen Bezug zu nehmen und um festzulegen, ob die Dichtedaten der Bildelemente, welche aufeinanderfolgend aus den erwähnten Originalbildspeichervorrichtungen gelesen werden, den Punkten der Konversionskurve entsprechen, welche in den Dichtebereichsspeichervorrichtungen gespeichert ist;

Bereichsplanspeichervorrichtungen zum Speichern eines Plans von Ergebnissen, die durch die Festlegungsvorrichtungen zur Verfügung gestellt werden;

Glättungsvorrichtungen zum aufeinanderfolgenden Einlesen der Dichtedaten von Bildelementen aus den Zwischenbildspeichervorrichtungen zur Ausgabe der Dichtedaten nach Anwendung des glättenden Raumfilterungsprozesses, wenn die besagten Bildelemente einem betreffenden Bereich zugehörig sind, der in den Bereichsplanspeichervorrichtungen gespeichert ist, und zur Ausgabe der Dichtedaten ohne Anwendung des glättenden Raumfilterungsprozesses, wenn die Bildelemente außerhalb des betreffenden Bereiches liegen;

Vorrichtungen zum Speichern des verarbeiteten Bildes zur Speicherung der Dichtedaten von sukzessive von den Glättungsvorrichtungen ausgegebenen Bildelementen; und

Ausgabevorrichtungen, um Inhalte von besagten Vorrichtungen zur Speicherung des verarbeiteten Bildes auszugeben.

**6.** Bildverarbeitungsgerät nach Anspruch 5, welches weiterhin erste Durchführungsvorrichtungen enthält, um eine Zufallszahl zum geglätteten Dichtedatenwert eines betreffenden Bildelementes, der sich aus dem glättenden Raumfilterungsprozeß ergibt, zu addieren, mit einer Amplitude der Zufallszahl, welche variabel mit einem absoluten Wert eines Differentialkoeffizienten an einem Punkt der Dichtekonversionskurve ist, korrespondierend zu dem Dichtedatenwert des betreffenden Bildelementes und zur Ausgabe einer resultierenden Summe in die erwähnten Vorrichtungen zum Speichern des verarbeiteten Bildes.

**7.** Bildverarbeitungsgerät nach Anspruch 5, welches weiterhin zweite Bedienungsvorrichtungen zur Addition einer Zufallszahl zu einem geglätteten Dichtedatenwert eines Bildelementes, der sich aus dem glättenden Raumfilterungsprozeß ergibt, enthält, mit einer Amplitude der Zufallszahl, die variabel mit der Standardabweichung von Dichtedaten der Bildelemente in einem kleinen, dem Filterungsprozeß zu unterziehenden Bereich ist, und zur Ausgabe einer resultierenden Summe in die Vorrichtungen zum Speichern des verarbeiteten Bildes.

**8.** Bildverarbeitungsgerät nach Anspruch 5, welches weiterhin dritte Bedienungsvorrichtungen zur Addition einer Zufallszahl zum geglätteten Dichtedatenwert eines betreffenden Bildelementes, der sich aus dem glättenden Raumfilterungsprozeß ergibt, enthält, mit einer Amplitude der Zufallszahl, welche variabel mit dem absoluten Wert eines Differentialkoeffizienten an einem Punkt der Dichtekonversionskurve, entsprechend dem Dichtedatenwert des betreffenden Bildelementes, ist, und mit einer Standardabweichung der Dichtedaten von Bildelementen in einem kleinen Bereich, der dem Filterungsprozeß unterworfen werden soll, und zur Ausgabe einer resultierenden Summe in die Vorrichtungen zum Speichern des verarbeiteten Bildes.

**Revendications**

**1.** Procédé de traitement d'images pour effectuer, en utilisant une courbe prédéterminée de conversion de densité, la conversion de densité de données de densité obtenues par la lecture d'un original ayant des tonalités consécutives, et un procédé de lissage par filtrage spatial sur les données de densité qui résultent de la conversion de densité, ledit procédé comportant :

une première étape consistant à effectuer, sur la base de la courbe prédéterminée de conversion de densité, la conversion de densité des données de densité d'une image originale,
une deuxième étape consistant à obtenir la valeur absolue du coefficient différentiel en chaque point de ladite courbe de conversion de densité,
une troisième étape consistant à déterminer les points de ladite courbe de conversion de densité pour lesquels lesdites valeurs absolues dépassent une valeur prédéterminée,
une quatrième étape consistant à préparer une carte des données de densité de l'image originale, correspondant aux points déterminés dans la troisième étape, et
une cinquième étape consistant à effectuer le procédé de lissage par filtrage spatial pour les données converties en termes de densité appartenant à ladite carte préparée au niveau de la quatrième étape.

**2.** Procédé de traitement d'images selon la revendication 1, comportant en outre une étape consistant à ajouter un nombre aléatoire aux données de densité lissées d'un pixel objet qui résultent dudit traitement de lissage par filtrage spatial effectué au niveau de la cinquième étape, ledit nombre aléatoire ayant une amplitude qui varie en fonction de la valeur absolue du coefficient différentiel obtenu au niveau du point de ladite courbe de conversion de densité qui correspond aux données de densité dudit pixel objet.

**3.** Procédé de traitement d'images selon la revendication 1, comportant en outre une étape consistant à ajouter un nombre aléatoire aux données de densité lissées d'un pixel objet qui résultent dudit traitement de lissage par filtrage spatial effectué au niveau de la cinquième étape, ledit nombre aléatoire ayant une amplitude qui varie en fonction de l'écart type des données de densité de pixels d'une petite zone à soumettre audit traitement de filtrage.

**4.** Procédé de traitement d'images selon la revendication 1, comportant en outre une étape consistant à ajouter un nombre aléatoire aux données de densité lissées d'un pixel objet qui résultent dudit traitement de lissage par filtrage spatial effectué au niveau de la cinquième étape, ledit nombre aléatoire ayant une amplitude qui varie en fonction de la valeur absolue du coefficient différentiel obtenu au niveau du point de ladite courbe de conversion de densité qui correspond aux données de densité dudit pixel objet et en fonction de l'écart type des données de densité de pixels d'un petite zone à soumettre audit traitement de filtrage.

5. Appareil de traitement d'images pour effectuer, en utilisant une courbe prédéterminée de conversion de densité, la conversion de densité de données de densité obtenues par la lecture d'un original ayant des tonalités consécutives, et un procédé de lissage par filtrage spatial sur les données de densité qui résultent de la conversion de densité, ledit appareil comportant :

des moyens d'entrée pour lire l'original,
des moyens (3) de mémorisation d'image originale pour mémoriser les données de densité d'une image originale lue par lesdits moyens d'entrée,
des moyens de désignation pour désigner une courbe de conversion de densité des données de densité de ladite image originale,
des moyens (10) de mémorisation de courbe de conversion de densité pour mémoriser ladite courbe de conversion de densité désignée par lesdits moyens de désignation,
des moyens de conversion de densité pour effectuer, sur la base de ladite courbe de conversion de densité mémorisée dans lesdits moyens de mémorisation de courbe de conversion de densité, une conversion de densité des données de densité, de ladite image originale, mémorisées dans lesdits moyens de mémorisation d'image originale,
des moyens (4) de mémorisation d'image intermédiaire pour mémoriser les données de densité résultant de la conversion de densité effectuée par lesdits moyens de conversion de densité,
des moyens (1) de calcul de dérivées pour calculer les valeurs absolues des coefficient différentiels en chacun des points de ladite courbe de conversion de densité mémorisée dans lesdits moyens de mémorisation de courbe de conversion de densité,
des moyens d'extraction de zone de densité pour déterminer les points de ladite courbe pour lesquels lesdites valeurs absolues dépassent une valeur prédéterminée,
des moyens de mémorisation de zone de densité pour mémoriser les points déterminés par lesdits moyens d'extraction de zone de densité,
des moyens de détermination pour examiner le contenu desdits moyens de mémorisation de zone de densité et déterminer si les données de densité de pixels extraites successivement desdits moyens de mémorisation d'image originale correspondent aux points de la courbe de conversion, mémorisés dans lesdits moyens de mémorisation de zone de densité,
des moyens de mémorisation de carte de zone pour mémoriser une carte des résultats fournis par lesdits moyens de détermination,
des moyens de lissage pour lire successivement les données de densité de pixels provenant desdits moyens de mémorisation d'image intermédiaire, envoyer en sortie les données de densité après avoir effectué le traitement de lissage par filtrage spatial lorsque lesdits pixels appartiennent à une zone objet mémorisée dans lesdits moyens de mémorisation de carte de zone, et envoyer en sortie les données de densité sans effectuer le traitement de lissage par filtrage spatial lorsque lesdits pixels sont situés à l'extérieur de ladite zone objet,
des moyens de mémorisation d'image traitée pour mémoriser les données de densité desdits pixels envoyés successivement en sortie à partir desdits moyens de lissage, et
des moyens de sortie pour envoyer en sortie le contenu desdits moyens de mémorisation d'image traitée.

6. Appareil de traitement d'images selon la revendication 5, comportant en outre des premiers moyens opératoires pour ajouter un nombre aléatoire aux données de densité lissées d'un pixel objet résultant dudit traitement de lissage par filtrage spatial, ledit nombre aléatoire ayant une amplitude qui varie en fonction de la valeur absolue du coefficient différentiel obtenu au niveau du point de ladite courbe de conversion de densité qui correspond aux données de densité dudit pixel objet, et envoyer la somme résultante vers lesdits moyens de mémorisation d'image traitée.

7. Appareil de traitement d'images selon la revendication 5, comportant en outre des deuxièmes moyens opératoires pour ajouter un nombre aléatoire aux données de densité lissées d'un pixel objet résultant dudit traitement de lissage par filtrage spatial, ledit nombre aléatoire ayant une amplitude qui varie en fonction de l'écart type des données de densité de pixels d'une petite zone à soumettre audit traitement de filtrage, et envoyer en sortie la somme résultante vers lesdits moyens de mémorisation d'image traitée.

8. Appareil de traitement d'images selon la revendication 5, comportant en outre des troisièmes moyens opératoires pour ajouter un nombre aléatoire aux données de densité lissées d'un pixel objet résultant dudit traitement de lissage par filtrage spatial, ledit nombre aléatoire ayant une amplitude qui varie en fonction de la valeur absolue du coefficient différentiel obtenu au niveau du point de ladite courbe de conversion de densité qui correspond aux données de densité dudit pixel objet et en fonction de l'écart type des données de densité de pixels d'une petite zone à soumettre audit traitement de filtrage, et envoyer en sortie la somme résultante vers lesdits moyens de mémorisation d'image traitée.

FIG. 1
(PRIOR ART)

FIG. 2 (PRIOR ART)

FIG. 3 (PRIOR ART)

FIG. 17

FIG. 4

FIG. 5

START

S1 | READ ORIGINAL IMAGE AND STORE ITS DENSITY DATA

S2 | DISPLAY ORIGINAL IMAGE

S3 | DESIGNATE DENSITY CONVERSION CURVE

S4 | DENSITY CONVERSION BASED ON DENSITY CONVERSION CURVE

S5 | DETERMINE ABSOLUTE VALUES OF DIFFERENTIAL COEFFICIENTS

S6 | EXTRACT AREAS HAVING DIFFERENTIAL COEFFICIENTS EXCEEDING PREDETERMINED VALUE AND SET THESE AREAS TO AREA DESIGNATION TABLE

S7 | SET AREAS TO BE SMOOTHED TO AREA MAP

S8 | EXTRACT DENSITY DATA OF SMALL AREA WITH PIXEL TO BE SMOOTHED LYING IN CENTER

S9 | STORE AVERAGE DENSITY DATA OF SMALL AREA IN PROCESSED IMAGE FILE

S10 | AVERAGING COMPLETED FOR ALL PIXELS IN SUBJECT AREAS?

NO

YES

S11 | OUTPUT DENSITY DATA IN PROCESSED IMAGE FILE TO OUTPUT SCANNER

END

FIG. 6

```
         ┌──────────┐
         │   S  3   │
         └──────────┘
              │
              ▼
      ┌──────────────────────┐
S31   │  DISPLAY             │
      │  COORDINATE          │
      │  SYSTEM              │
      └──────────────────────┘
              │
              ▼
      ┌──────────────────────┐
S32   │  INPUT PARAMETERS    │
      │  DEFINING DENSITY    │
      │  CONVERSION CURVE    │
      └──────────────────────┘
              │
              ▼
      ┌──────────────────────┐
S33   │  DISPLAY DENSITY     │
      │  CONVERSION CURVE    │
      └──────────────────────┘
              │
              ▼
         ┌──────────┐
         │  RETURN  │
         └──────────┘
```

FIG. 7

```
                    ┌─────────┐
                    │  S  4   │
                    └─────────┘
                         │
 ┌───────────────────────┼─────────────────────────┐
 │  ┌·······················│···························┐
 │  : DENSITY              │                          :
 │  : CONVERSATION         │                          :
 │  : FOR ONE PIXEL        ▼                          :
 │  :           ┌──────────────────────────┐         :
 │  :      S41  │ READ  DENSITY  DATA       │         :
 │  :           │ OF  PIXEL  IN             │         :
 │  :           │ ORIGINAL  IMAGE           │         :
 │  :           └──────────────────────────┘         :
 │  :                      │                          :
 │  :                      ▼                          :
 │  :           ┌──────────────────────────┐         :
 │  :      S42  │ EFFECT  DENSITY           │         :
 │  :           │ CONVERSION               │         :
 │  :           └──────────────────────────┘         :
 │  :                      │                          :
 │  :                      ▼                          :
 │  :           ┌──────────────────────────┐         :
 │  :      S43  │ STORE  CONVERTED          │         :
 │  :           │ DENSITY  DATA  IN         │         :
 │  :           │ INTERMEDIATE  FILE        │         :
 │  :           └──────────────────────────┘         :
 │  └·······················│···························┘
 │                          ▼
 │          S44         ╱───────────────╲
 │    NO          ╱  DENSITY  CONBERSION   ╲
 └──────────────<   COMPLETED  FOR  ALL     >
                  ╲       PIXELS?          ╱
                   ╲───────────────────╱
                          │ YES
                          ▼
                    ┌─────────┐
                    │ RETURN  │
                    └─────────┘
```

FIG. 8

S 5

CALCULATION OF
DIFFERENTIAL COEFFICIENT
FOR ONE STAGE OF
DENSITY CONVERSION
CURVE

S51  READ OUTPUT DENSITY
DATA FOR ONE STAGE OF
INPUT DENSITY DATA

S52  COMPARE OUTPUT DENSITY
DATA FOR THIS STAGE
WITH THAT OF ADJACENT
STAGE, AND ADOPT GREATER
ABSOLUTE VALUE AS
DIFFERENTIAL COEFFICIENT
FOR THIS STAGE

S53  DIFFERENTIAL
COEFFICIENTS SET FOR
ALL 256 STAGES?

NO

YES

RETURN

FIG. 9

S 6

ONE STAGE SETTING TO
AREA DESIGNATION TABLE

S61 READ ABSOLUTE VALUE OF DIFFERENTIAL COEFFICIENT FOR ONE STAGE OF DENSITY DATA

S62 "1" IS SET TO AREA DESIGNATION TABLE FOR ABSOLUTE VALUE 2 OR MORE, AND "0" SET FOR ABSOLUTE VALUE LESS THAN 2

S63 AREA DESIGNATION COMPLETED FOR ALL 256 STAGES?

NO

YES

RETURN

20

FIG. 10

S 7

AREA DESIGNATION
FOR ONE PIXEL

S71 READ DENSITY DATA FOR
ONE PIXEL FROM ORIGINAL
IMAGE FILE

S72 SET "1" OR "0" TO
CORRESPONDING POSITION
IN AREA MAP

S73
NO AREA SETTING
COMPLETED FOR ALL
PIXELS?

YES

RETURN

FIG. 11

```
        ┌──────────┐
        │    S 9   │
        └────┬─────┘
             │
             ▼
  ┌──────────────────────────┐
S91│ READ DENSITY DATA OF     │
   │ SMALL AREA CENTERING     │
   │ AROUND A PIXEL TO BE     │
   │ SMOOTHED                 │
   └──────────┬───────────────┘
              │
              ▼
  ┌──────────────────────────┐
S92│ OBTAIN AVERAGE OF        │
   │ DENSITY DATA IN          │
   │ FLOATING-POINT           │
   │ NUMBER                   │
   └──────────┬───────────────┘
              │
              ▼
  ┌──────────────────────────┐
S93│ CONVERT AVERAGE TO       │
   │ INTEGER AND STORE IT     │
   │ IN PROCESSED IMAGE       │
   │ FILE                     │
   └──────────┬───────────────┘
              │
              ▼
        ┌──────────┐
        │  RETURN  │
        └──────────┘
```

FIG. 12

(S8)

S12 | OBTAIN STANDARD
DEVIATION IN SMALL
AREA

S13 | GENERATE RANDOM
NUMBER BESED ON
STANDARD DEVIATION
AND DIFFERENTIAL
COEFFICIENT

S14 | ADD RANDOM NUMBER TO
AVERAGE DENSITY DATA
AND STORE RESULT IN
PROCESSED IMAGE FILE

(S10)

FIG. 13

```
                    ┌─────────────┐
                    │     S13     │
                    └──────┬──────┘
                           │
                           ▼
         ┌─────────────────────────────────┐
S131     │ READ DENSITY DATA OF            │
         │ SUBJECT PIXEL                   │
         └────────────────┬────────────────┘
                          │
                          ▼
         ┌─────────────────────────────────┐
S132     │ READ ABSOLUTE VALUE             │
         │ OF DIFFERENTIAL                 │
         │ COEFFICIENT FOR THIS            │
         │ DENSITY DATA                    │
         └────────────────┬────────────────┘
                          │
                          ▼
         ┌─────────────────────────────────┐
S133     │ DETERMINE RANGE OF              │
         │ RANDOM NUMBER                   │
         │ GENERATION FROM                 │
         │ STANDERD DEVIATION              │
         │ AND ABSOLUTE VALUE              │
         └────────────────┬────────────────┘
                          │
                          ▼
         ┌─────────────────────────────────┐
S134     │ GENERATE NUIFORM                │
         │ RANDOM NUMBER IN                │
         │ GENERATION RANGE                │
         └────────────────┬────────────────┘
                          │
                          ▼
                    ┌─────────────┐
                    │   RETURN    │
                    └─────────────┘
```

FIG. 14A

FIG. 14B

FIG. 14C

FIG. 15

FIG. 16

| $\Gamma_{x-1,y+1}$ | $\Gamma_{x,y+1}$ | $\Gamma_{x+1,y+1}$ |
|---|---|---|
| $\Gamma_{x-1,y}$ | $\Gamma_{x,y}$ | $\Gamma_{x+1,y}$ |
| $\Gamma_{x-1,y-1}$ | $\Gamma_{x,y-1}$ | $\Gamma_{x+1,y-1}$ |